# EUROPEAN PATENT SPECIFICATION

(11) **EP 3 689 017 B1**
(45) Date of publication and mention of the grant of the patent: **31.01.2024**
(21) Application number: 18793467.4
(22) Date of filing: 28.09.2018
(51) Int. Cl.: H04W 24/08, H04W 24/10, H04B 17/309

(54) **CONFIGURATION OF CELL QUALITY DERIVATION PARAMETERS**
KONFIGURATION VON ZELLQUALITÄTSABLEITUNGSPARAMETERN
CONFIGURATION DE PARAMÈTRES DE DÉRIVATION DE QUALITÉ DE CELLULE

(30) Priority: 28.09.2017 US 201762564814 P
(43) Date of publication of application: 05.08.2020
(73) Proprietor: Telefonaktiebolaget LM Ericsson (publ), 164 83 Stockholm (SE)
(72) Inventor: RAMACHANDRA, Pradeepa, 589 29 Linköping (SE); DA SILVA, Icaro L. J., 170 77 Solna (SE)
(74) Representative: Röthinger, Rainer
(86) International application number: PCT/IB2018/057560
(87) International publication number: WO 2019/064258

(56) References cited:
- US-A1- 2013 035 085
- CATT: "Configurations for cell quality derivation and beam reporting", 3GPP DRAFT; R2-1707902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317837, Retrieved from the Internet: URL:http://www.3gpp.org/ftp/Meetings_3GPP_ SYNC/RAN2/Docs/ [retrieved on 2017-08-20]
- SAMSUNG: "Measurement configuration and reporting, signalling baseline", 3GPP DRAFT; R2-1709486 MEASUREMENT SIGNALLING BASELINE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051319211, Retrieved from the Internet: URL:http://www.3gpp.org/ftp/Meetings_3GPP_ SYNC/RAN2/Docs/ [retrieved on 2017-08-20]
- CATT: "N and Threshold for Cell quality derivation", 3GPP DRAFT; R2-1706401 N AND THRESHOLD FOR CELL QUALITY DERIVATION V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Qingdao, China; 20170627 - 20170629 26 June 2017 (2017-06-26), XP051300910, Retrieved from the Internet: URL:http://www.3gpp.org/ftp/Meetings_3GPP_ SYNC/RAN2/Docs/ [retrieved on 2017-06-26]
- ZTE CORPORATION: "Discussion on measurement report", 3GPP DRAFT; R2-1706895 DISCUSSION ON MEASUREMENT REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051301392, Retrieved from the Internet: URL:http://www.3gpp.org/ftp/Meetings_3GPP_ SYNC/RAN2/Docs/ [retrieved on 2017-06-26]
- ERICSSON: "Summary of [NR-AH2#13][NR/RRM] TP on RRM", 3GPP DRAFT; R2-1707855 - SUMMARY NR-AH2-13-NR EMAIL DISCUSSION 13 TP ON RRM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Berlin, Germany; 20170821 - 20170825 20 August 2017 (2017-08-20), XP051317799, Retrieved from the Internet: URL:http://www.3gpp.org/ftp/Meetings_3GPP_ SYNC/RAN2/Docs/ [retrieved on 2017-08-20]

## Description

### TECHNICAL FIELD

The present disclosure generally relates to wireless communications and wireless communication networks.

### INTRODUCTION

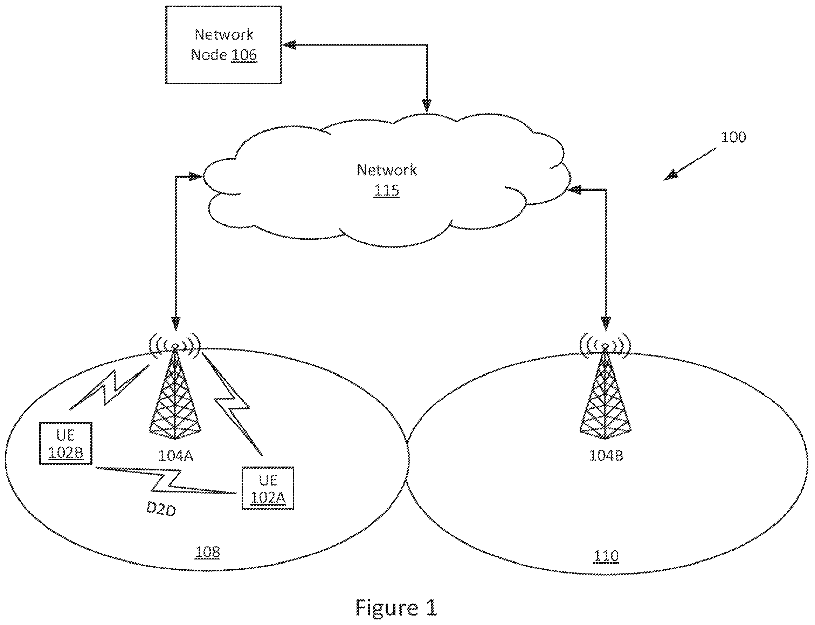

The architecture for New Radio (NR) (also known as 5G or Next Generation) is being discussed in standardization bodies such as 3GPP. Figure 1 illustrates an example of a wireless network 100 that can be used for wireless communications. Wireless network 100 includes UEs 102A-102B and a plurality of network nodes, such as radio access nodes 104A-104B (e.g. eNBs, gNBs, etc.) connected to one or more network nodes 106 via an interconnecting network 115. The network 100 can use any suitable deployment scenarios. UEs 102 within coverage area 108 can each be capable of communicating directly with radio access node 104A over a wireless interface. In some embodiments, UEs 102 can also be capable of communicating with each other via D2D communication.

As an example, UE 102A can communicate with radio access node 104A over a wireless interface. That is, UE 102A can transmit wireless signals to and/or receive wireless signals from radio access node 104A. The wireless signals can contain voice traffic, data traffic, control signals, and/or any other suitable information. In some embodiments, an area of wireless signal coverage associated with a radio access node 104A can be referred to as a cell 108.

The interconnecting network 125 can refer to any interconnecting system capable of transmitting audio, video, signals, data, messages, etc., or any combination of the preceding. The interconnecting network 125 can include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 can be a core network node 130, managing the establishment of communication sessions and other various other functionalities for UEs 110. Examples of core network node 130 can include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), MDT node, etc. UEs 110 can exchange certain signals with the core network node using the non-access stratum layer. In non-access stratum signaling, signals between UEs 110 and the core network node 130 can be transparently passed through the radio access network. In some embodiments, radio access nodes 120 can interface with one or more network nodes over an internode interface.

System information, including the control information required for a UE 102 to access the cell 108, is periodically broadcast by the radio access node(s) 104. Some uncertainty may exist between the UE 102 and the network related to the delivery of this system information.

Document "Configurations for cell quality derivation and beam reporting", CATT, 3GPP draft R2-1707902 may be construed to disclose configurations of cell quality derivation and beam reporting. The following proposals were made. Proposal 1: There is no benefit to allow cell specific configuration of N. Proposal 2: Configure separate values of N for NR-SS and CSI-RS. Proposal 3: The actual number of best beams used in cell quality derivation can be different between two compared cells in one event. Proposal 4: Threshold for cell quality derivation is configured per frequency. Proposal 5: If more than one type of cell quantities are be configured in measurement configuration, the corresponding type(s) of threshold for best beams selection during cell quality derivation should also be configured. Proposal 6: For threshold during cell quality derivation, separate configurations for NR-SS and CSI-RS are supported. Proposal 7: The number for beam reporting(x) is configured per frequency. Proposal 8: Separate configuration of x for NR-SS and CSI-RS are supported. Proposal 9: The UE selects the highest x measured quality of beams of each cell for beam reporting. Proposal 10: The cell and beam measurement quantities to be reported can be configured separately.

Document "Measurement configuration and reporting, signalling baseline", Samsung, 3GPP draft R2-1709486 may be construed to disclose high level contents/ information structure of the measurement related signalling (configuration and reporting). The following proposals were made. Proposal 1: Adopt the general LTE measurement configuration information structure with the following small changes: measurements: a) the measurement object should be an optional part of a measurement, while b) it should also be to configure other parameters for a particular measurement i.e. that a measurement may concern more parameters than just the references to object and reporting configuration; report configuration: a) change most mandatory fields to optional, in particular triggerQuantity, reportQuantity and maxReportCells and b) change field purpose into a choice (alike for events) to facilitate specification of fields applicable to the concerned type of measurement; measurement report: change some of the mandatory fields to optional i.e. for some measurements there should be no need to include radio quality results of the Pcell. Proposal 2: RAN2 is requested to discuss and agree how to come to a first baseline for the NR measurement configuration, covering: whether some general principles can be agreed as staring point e.g. to support by default the parameters introduced in the first LTE release/ first release in which a corresponding LTE supported WI was introduced, and what process to use for discussing/ concluding the remaining parameters. For this some kind of offline effort seems appropriate. The following observation was made. Observation: given RAN2 status, it seems not yet possible to conclude whether to facilitate re-use for other purposes, the CSI RS configurations are better placed elsewhere than in the measurement object. For the same reason, it seems too early to conclude about the timing configuration for CSI-RS based RRM measurements.

Document US 2013/035085 A1 may be construed to disclose a base station that generates and sends measurement configuration to a wireless terminal. The measurement configuration indicates the measurements to be made by the wireless terminals and to report on the performed measurements to the base station. The measurement configuration indicates that the measurements are to be performed and to be reported based on a prioritization level. The prioritization can be indicated at various levels including the measurement identities level, the measurement objects level, and the reporting configurations level.

### SUMMARY

It is an object of the present disclosure to obviate or mitigate at least one disadvantage of the prior art.

A user equipment, an access node, methods, and a computer-readable medium for configuring and utilizing cell quality derivation parameters according to the independent claims are provided herein. Developments are set forth in the dependent claims.

### BRIEF DESCRIPTION OF THE DRAWINGS

Embodiments of the present disclosure will now be described, by way of example only, with reference to the attached Figures, wherein:
Figure 1 illustrates an example wireless network;
Figure 2 illustrates an example measurement model;
Figure 3 illustrates an example signaling diagram;
Figure 4 is a flow chart illustrating an example method performed in a UE;
Figure 5 is a flow chart illustrating an example method performed in an access node;
Figure 6 is a flow chart illustrating an example method performed in a UE;
Figure 7 is a block diagram of an example UE;
Figure 8 is a block diagram of an example UE with modules;
Figure 9 is a block diagram of an example network node; and
Figure 10 is a block diagram of an example network node with modules.

### DETAILED DESCRIPTION

The embodiments set forth below represent information to enable those skilled in the art to practice the embodiments. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

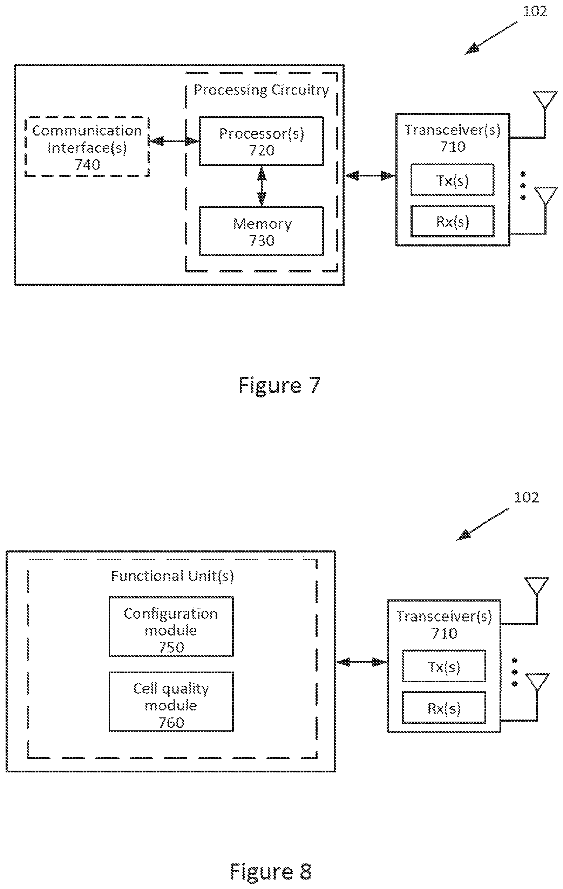

In some embodiments, the non-limiting term "user equipment" (UE) is used and it can refer to any type of wireless device which can communicate with a network node and/or with another UE in a cellular or mobile or wireless communication system. Examples of UE are target device, device to device (D2D) UE, machine type UE or UE capable of machine to machine (M2M) communication, personal digital assistant, tablet, mobile terminal, smart phone, laptop embedded equipped (LEE), laptop mounted equipment (LME), USB dongles, ProSe UE, V2V UE, V2X UE, MTC UE, eMTC UE, FeMTC UE, UE Cat 0, UE Cat M1, narrow band IoT (NB-IoT) UE, UE Cat NB1, etc. Example embodiments of a UE are described in more detail below with respect to Figure 7.

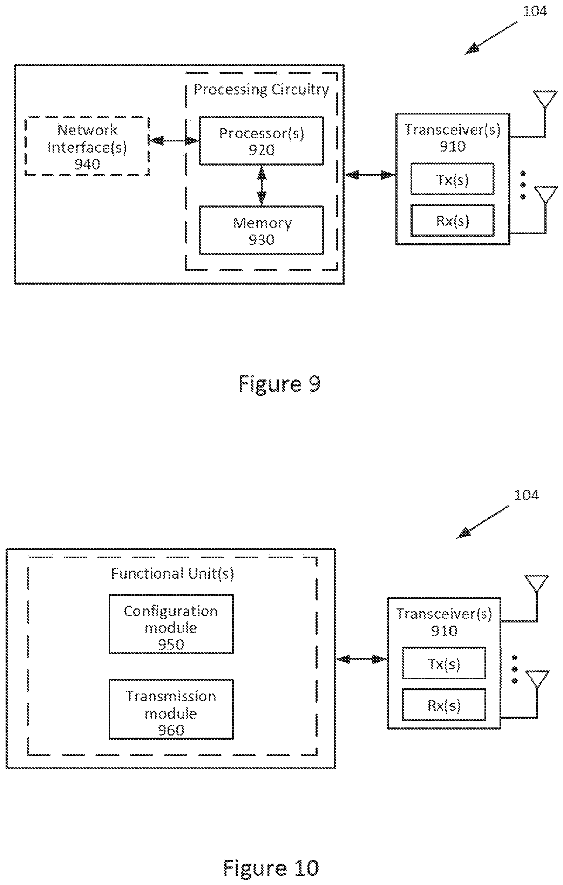

In some embodiments, the non-limiting term "network node" is used and it can correspond to any type of radio access node (or radio network node) or any network node, which can communicate with a UE and/or with another network node in a cellular or mobile or wireless communication system. Examples of network nodes are NodeB, MeNB, SeNB, a network node belonging to MCG or SCG, base station (BS), multi-standard radio (MSR) radio access node such as MSR BS, eNodeB, gNB network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, Self-organizing Network (SON), positioning node (e.g. E-SMLC), MDT, test equipment, etc. Example embodiments of a network node are described in more detail below with respect to Figure 9.

In some embodiments, the term "radio access technology" (RAT) refers to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term "radio node" used herein can be used to denote a UE or a network node.

In some embodiments, a UE can be configured to operate in carrier aggregation (CA) implying aggregation of two or more carriers in at least one of DL and UL directions. With CA, a UE can have multiple serving cells, wherein the term 'serving' herein means that the UE is configured with the corresponding serving cell and may receive from and/or transmit data to the network node on the serving cell e.g. on PCell or any of the SCells. The data is transmitted or received via physical channels e.g. PDSCH in DL, PUSCH in UL etc. A component carrier (CC) also interchangeably called as carrier or aggregated carrier, PCC or SCC is configured at the UE by the network node using higher layer signaling e.g. by sending RRC configuration message to the UE. The configured CC is used by the network node for serving the UE on the serving cell (e.g. on PCell, PSCell, SCell, etc.) of the configured CC. The configured CC is also used by the UE for performing one or more radio measurements (e.g. RSRP, RSRQ, etc.) on the cells operating on the CC, e.g. PCell, SCell or PSCell and neighboring cells.

In some embodiments, a UE can also operate in dual connectivity (DC) or multi-connectivity (MC). The multicarrier or multicarrier operation can be any of CA, DC, MC, etc. The term "multicarrier" can also be interchangeably called a band combination.

The term "radio measurement" used herein may refer to any measurement performed on radio signals. Radio measurements can be absolute or relative. Radio measurements can be e.g. intra-frequency, inter-frequency, CA, etc. Radio measurements can be unidirectional (e.g., DL or UL or in either direction on a sidelink) or bidirectional (e.g., RTT, Rx-Tx, etc.). Some examples of radio measurements: timing measurements (e.g., propagation delay, TOA, timing advance, RTT, RSTD, Rx-Tx, etc.), angle measurements (e.g., angle of arrival), power-based or channel quality measurements (e.g., path loss, received signal power, RSRP, received signal quality, RSRQ, SINR, SNR, interference power, total interference plus noise, RSSI, noise power, CSI, CQI, PMI, etc.), cell detection or cell identification, RLM, SI reading, etc. The measurement may be performed on one or more links in each direction, e.g., RSTD or relative RSRP or based on signals from different TPs of the same (shared) cell.

The term "signaling" used herein may comprise any of: high-layer signaling (e.g., via RRC or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

The term "time resource" used herein may correspond to any type of physical resource or radio resource expressed in terms of length of time. Examples of time resources include: symbol, time slot, sub-frame, radio frame, TTI, interleaving time, etc. The term "frequency resource" may refer to sub-band within a channel bandwidth, subcarrier, carrier frequency, frequency band. The term "time and frequency resources" may refer to any combination of time and frequency resources.

Some examples of UE operation include: UE radio measurement (see the term "radio measurement" above), bidirectional measurement with UE transmitting, cell detection or identification, beam detection or identification, system information reading, channel receiving and decoding, any UE operation or activity involving at least receiving of one or more radio signals and/or channels, cell change or (re)selection, beam change or (re)selection, a mobility-related operation, a measurement-related operation, a radio resource management (RRM)-related operation, a positioning procedure, a timing related procedure, a timing adjustment related procedure, UE location tracking procedure, time tracking related procedure, synchronization related procedure, MDT-like procedure, measurement collection related procedure, a CA-related procedure, serving cell activation/deactivation, CC configuration/de-configuration, etc.

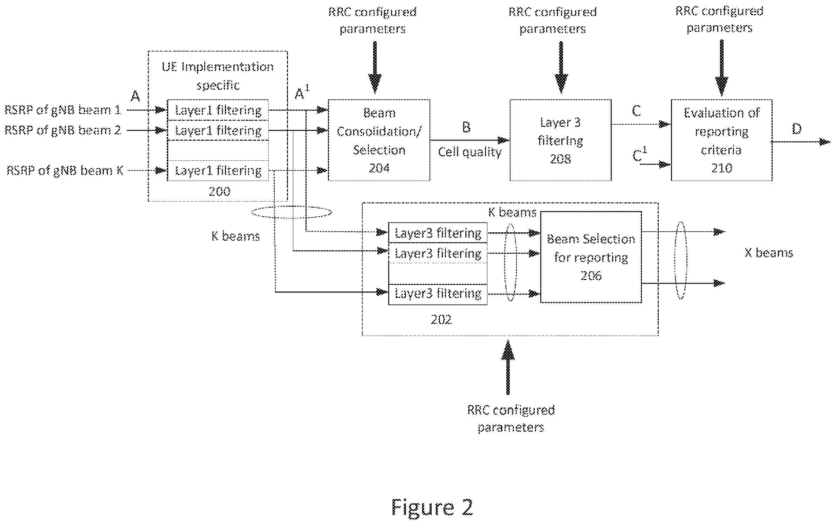

Figure 2 illustrates an example of the measurement model for 5G/NR networks. According to 3GPP Technical Specification (TS) 38.300, in radio resource control (RRC)_CONNECTED, a UE measures multiple beams (at least one) of a cell and the measurements results (power values) are averaged to derive the cell quality. In doing so, the UE is configured to consider a subset of the detected beams: the N best beams above an absolute threshold. Filtering takes place at two different levels: at the physical layer to derive beam quality and then at RRC level to derive cell quality from multiple beams. Cell quality from beam measurements is derived in the same way for the serving cell(s) and for the non-serving cell(s). Measurement reports may contain the measurement results of the X best beams if the UE is configured to do so by the network (e.g. gNB).

Referring to Figure 2, "K beams" correspond to the measurements on the NR synchronization signal (SS) NR-SS block, or Channel State Information-Reference Signal (CSI-RS) resources configured for Layer 3 (L3) mobility by gNB and detected by the UE at Layer 1 (L1).

"A" represents measurements (e.g. beam specific samples) internal to the physical layer.

"Layer 1 filtering" (200) represents internal layer 1 filtering of the inputs measured at point A. Exact filtering can be implementation dependent. How the measurements are executed in the physical layer by an implementation (e.g. inputs A and Layer 1 filtering) can be UE-specific and may not be constrained by the standard.

"A¹" represents measurements (i.e. beam specific measurements) reported by layer 1 to layer 3 after the Layer 1 filtering 200.

"Beam Consolidation/Selection (Cell quality derivation)" (204) includes beam-specific measurements being consolidated to derive cell quality if N > 1, else when N = 1 the best beam measurement is selected to derive cell quality. The behaviour of the Beam consolidation/selection may be standardized and the configuration of this module can be provided by RRC signaling. The reporting period at "B" equals one measurement period at A¹. When N > 1, it has been agreed that the linear power scale based averaging of beam measurements will be used by the UE. The beams to be considered for the beam consolidation are only those beams that are above an absolute threshold (T_{threshold}).

"B" represents a measurement (e.g. cell quality) derived from beam-specific measurements reported to layer 3 after beam consolidation/selection.

"Layer 3 filtering" (208) for cell quality: filtering performed on the measurements provided at point B. The behavior of the Layer 3 filters can be standardized and the configuration of the layer 3 filters is provided by RRC signaling. Filtering reporting period at C equals one measurement period at B.

C: a measurement after processing in the layer 3 filter. The reporting rate is identical to the reporting rate at point B. This measurement is used as input for one or more evaluation of reporting criteria.

Evaluation of reporting criteria (210): checks whether actual measurement reporting is necessary at point D. The evaluation can be based on more than one flow of measurements at reference point C, e.g., to compare between different measurements. This is illustrated by input C and C¹. The UE may evaluate the reporting criteria at least every time a new measurement result is reported at point C, C¹. The reporting criteria can be standardized and the configuration is provided by RRC signaling (UE measurements).

D: measurement report information (message) sent on the radio interface.

"Layer 3 filtering" (202) per beam includes filtering performed on the measurements provided at point A¹. The behaviour of the Layer 3 filters may be standardized and the configuration of the layer 3 filters can be provided by RRC signaling.

"Beam Selection for beam reporting" (206) includes beam specific measurements being consolidated to select the X number of best beams from which beam information will be included in measurement reports. The behaviour of the beam selection may be standardized and the configuration of this module can be provided by RRC signaling.

The number of beams (N) and the corresponding threshold (T_{threshold}) to be considered for beam consolidation/selection function can be specified per carrier frequency and is configurable in the measurement object information element (IE). Configuring the cell quality derivation related parameters in the measurement object can force the UE to use the same method to derive cell level measurements for all events. This is a limitation of the existing agreements in 3GPP.

Different events are configured for different purposes. For example, an A2 event can be used for setting up the inter-frequency measurements whereas an A3 event can be used to trigger intra-frequency handovers. Depending on the parameter values used for cell quality derivation (CQD), the cell level measurements will differ. Using the same CQD parameters will result in having a single, common method of deriving cell quality for all events, which could be limiting if the network wants the UE to derive cell quality using different methods for different events.

Further, different trigger quantities can be chosen in NR (such as RSRP, RSRQ, etc.). However, independent of what trigger quantity has been chosen, the current agreements mandate the usage of same CQD parameters. This could be limiting if the impact of CQD parameters on different trigger quantities vary differently.

To remove such a restriction with the cell quality derivation parameters (N and T_{threshold}), some embodiments described herein propose to provide additional configuration regarding these parameters in the report configuration (*reportConfig*) message and/or the measurement configuration (*measConfig*) message.

The *reportConfig* can optionally contain the cell quality derivation parameters and, if they are present, then the UE can use these parameters to derive the cell quality for the specified event. If the *reportConfig* does not contain any cell quality derivation parameters, the UE can use the parameters configured in the measurement object.

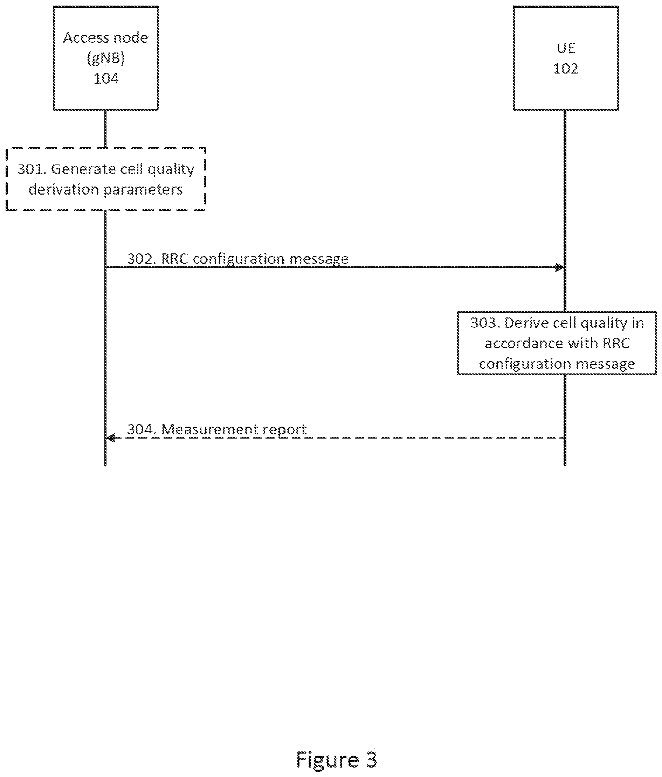

Figure 3 is an example signaling diagram. The access node 104 can generate the cell quality derivation parameters (301). The access node 104 transmits at least one RRC configuration message (302) to the UE 102. The RRC configuration message(s) can include measurement configuration information, which can include a measurement object and/or a report configuration. The RRC configuration message(s) (302) can include the cell quality derivation parameters generated by the access node 104.

The UE 102 receives the at least one RRC configuration message (302) and derives cell quality in accordance with the received RRC configuration message (303). The UE 102 can determine if a received report configuration message includes cell quality derivation parameters. Responsive to the report configuration message including cell quality derivation parameters, the UE 102 can derive cell quality in accordance with these parameters. Responsive to the report configuration message not including cell quality derivation parameters, the UE 102 can derive cell quality in accordance with parameters included in the measurement object message.

The UE 102 can transmit a measurement report (304) to the access node 104.

In some embodiments, the level of granularity of these parameters can be increased, even if they are configured per measurement object. In other words, there can be a configuration per measurement quantity, e.g. a threshold per RS type and/or measurement quantity such as: Threshold per RSRP for SS/PBCH measurements; Threshold per RSRQ for SS/PBCH measurements; Threshold per SINR for SS/PBCH measurements; Threshold per RSRP for CSI-RS measurements; Threshold per RSRQ for CSI-RS measurements; Threshold per SINR for CSI-RS measurements.

Accordingly, a network can configure the cell quality derivation parameters specifically for the event, thus allowing the network to configure different CQD parameters for different trigger quantities if need be.

In one example embodiment, the CQD parameters configured in the report configuration can be of the same format as that in the measurement object. An information element (IE) can be included in one or both of the measurement object and reporting configuration messages. Depending on the *RSType* as mentioned in the reporting configuration, only the relevant *RSType* specific CQD parameters can be configured. For example, if the *RSType* is chosen as SS, then only *nroSS-BlocksToAverage* and *threshAvgSSBlocks* are included in the *CellMeasInfo.* Similarly, if the *RSType* is chosen as CSI-RS, then only *nroCSI-RS-ResourcesToAverage* and *threshAvgCSI-RS-resources* are included in the *CellMeasInfo.*

A first example report configuration IE is illustrated below. The example report configuration includes *nroSS-BlocksToAverage, nroCSI-RS-ResourcesToAverage, threshAvgSSBlocks,* and *threshAvgCsi-RS-resources* parameters. The *nroSS-BlocksToAverage* and *threshAvgSSBlocks* parameters can indicate the values of N and T_{threshold} for SS blocks respectively. The *nroCSI-RS-ResourcesToAverage* and *threshAvgCsi-RS-resources* parameters can indicate the values of N and T_{threshold} for CSI-RS.

First example report configuration:

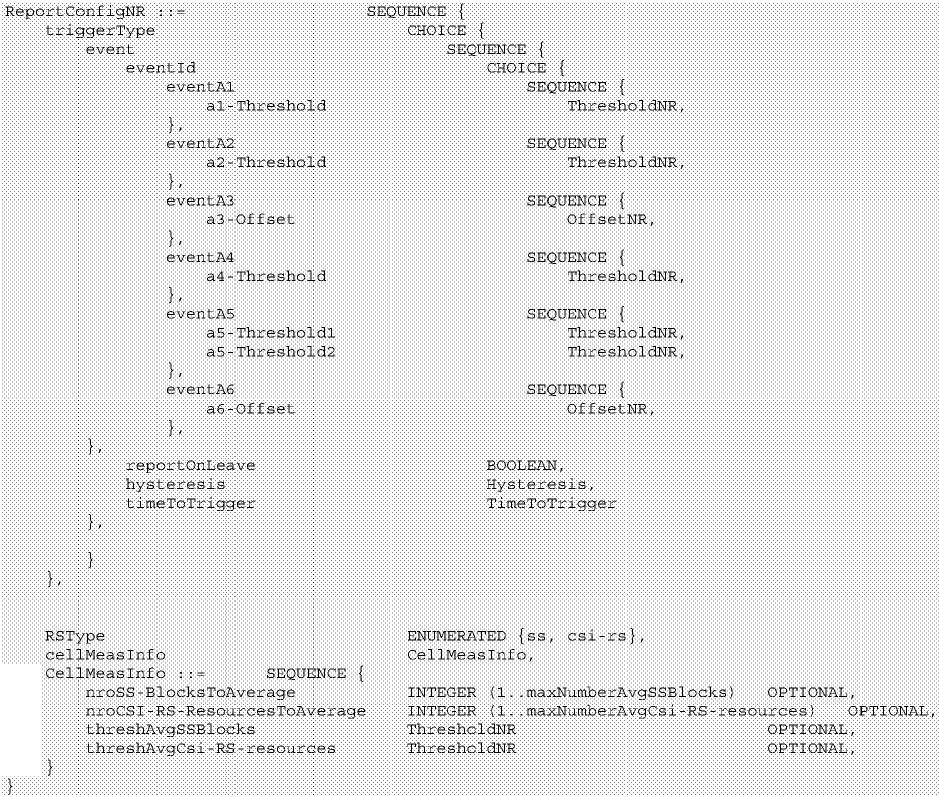

In another embodiment, the report configuration can include only the delta configuration compared to what is already provided in the measurement object related to CQD parameters. An example measurement object contents and report configuration contents including deltaloffset values are illustrated below.

In such embodiments, the UE can derive the CQD parameters to be used for an event based on the threshold value(s) (*threshAvgSSBlocks*, *threshAvgCsi-RS-resources*) configured in the measurement object and the offset value(s) (*threshAvgSSBlocksOffset*, *threshAvgCsi-RS-resourcesOffset*) configured in the reporting configuration.

The first example measurement object can include *nroSS-BlocksToAverage*, *nroCSI-RS-ResourcesToAverage*, *threshAvgSSBlocks*, and *threshAvgCsi-RS-resources* parameters (similar to as described with respect to the first example report configuration). The second example report configuration can include *nroSS-BlocksToAverage*, *nroCSI-RS-ResourcesToAverage*, *threshAvgSSBlocksOffest*, and *threshAvgCsi-RS-resourcesOffset* parameters.

### First example measurement object:

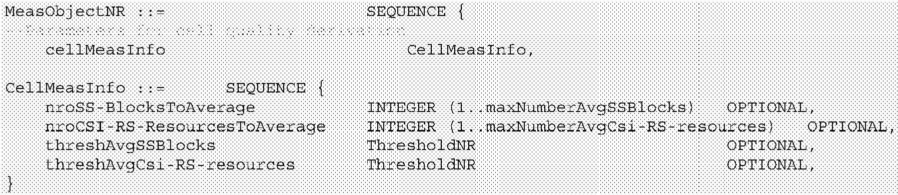

### Second example report configuration with offset values:

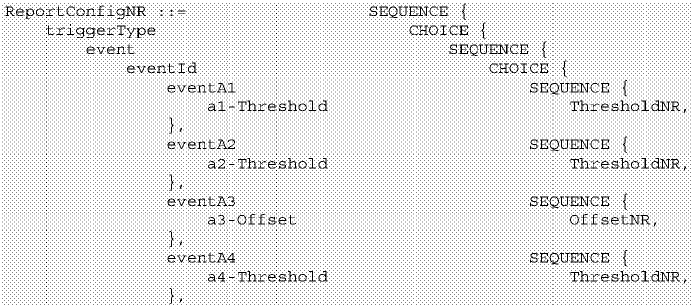

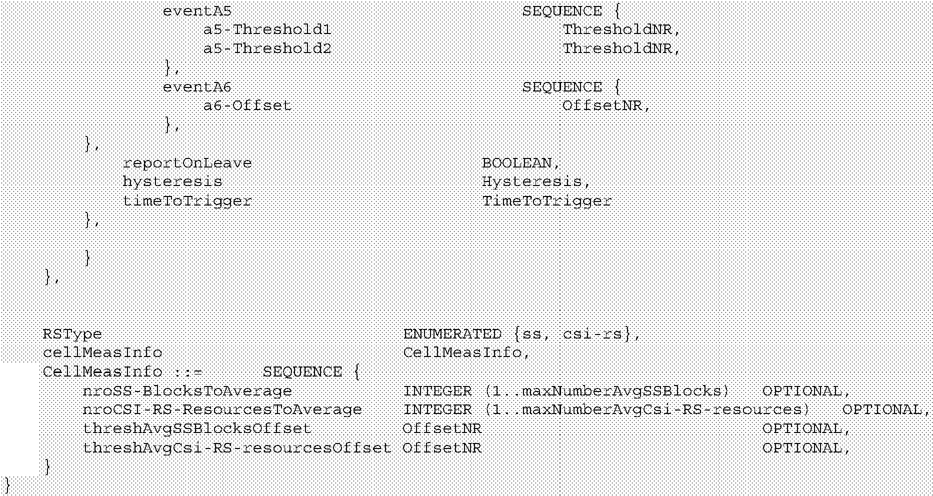

In some embodiments, an increased granularity can be implemented by adding more levels in the measurement object, for example, per RS type and/or per measurement quantity. Two possibilities are considered herein with respect to the *MeasObjectNR* IE. *MeasObjectNR* specifies information applicable for SS/PBCH block(s) intra/inter-frequency measurements or CSI-RS intra/inter-frequency measurements.

A second example measurement object is illustrated below. In this example, instead of including a single value for each of the *absThreshSS-BlocksConsolidation* and *absThreshCSI-RS-Consolidation* parameters, the measurement object can include a plurality of (optional) parameters such as: *absThreshSS-BlocksConsolidation-rsrp* (RSRPRange), *absThreshSS-BlocksConsolidation-rsrq* (RSRQRange), *absThreshSS-BlocksConsolidation-sinr* (RSRQRange), *absThreshCSI-RS-Consolidation-rsrp* (RSRPRange), *absThreshCSI-RS-Consolidation-rsrq* (RSRQRange), and *absThreshCSI-RS-Consolidation-sinr* (SINRRange).

### Second example measurement object:

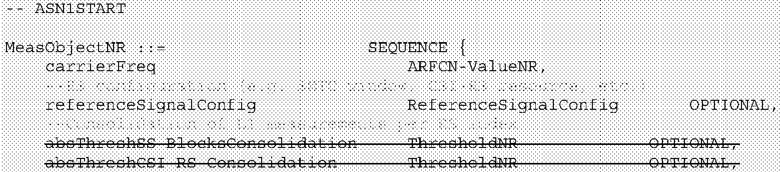

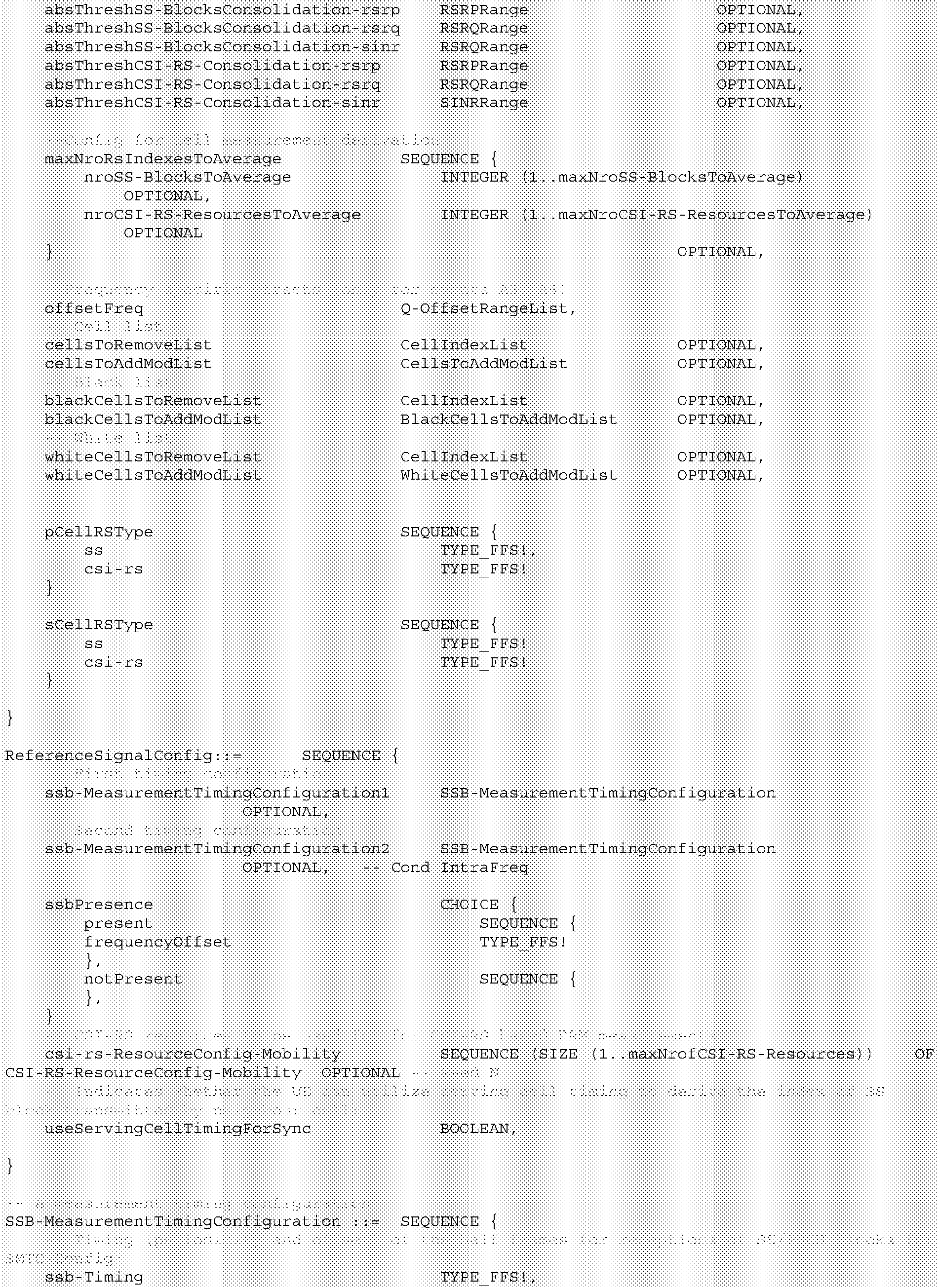

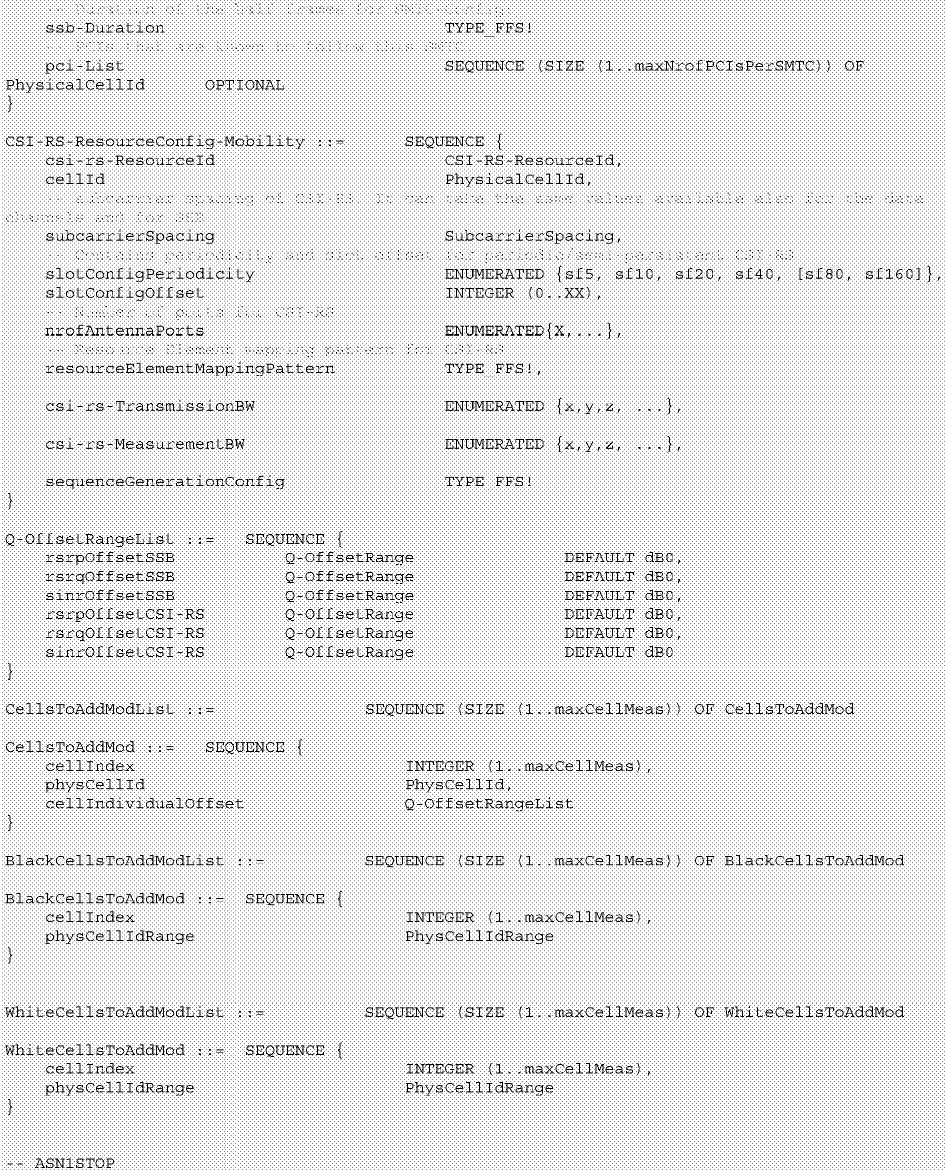

A third example measurement object is illustrated below. In this example, the *ThresholdNR* value(s) for the *absThreshSS-BlocksConsolidation* and *absThreshCSI-RS-Consolidation* parameters can be further defined in the measurement object IE. *ThresholdNR* can include *rsrp-threshold* (RSRPRange), *rsrq-threshold* (RSRQRange), and *sinr-threshold* (SINRRange).

It is noted that in the third example *MeasObjectNR* IE, the *ThrehsholdNR* IE is defined as a sequence of one or multiple values where the network can configure a single measurement quantity or multiple. Hence, one or multiple threshold(s) per RS type.

### Third example measurement object:

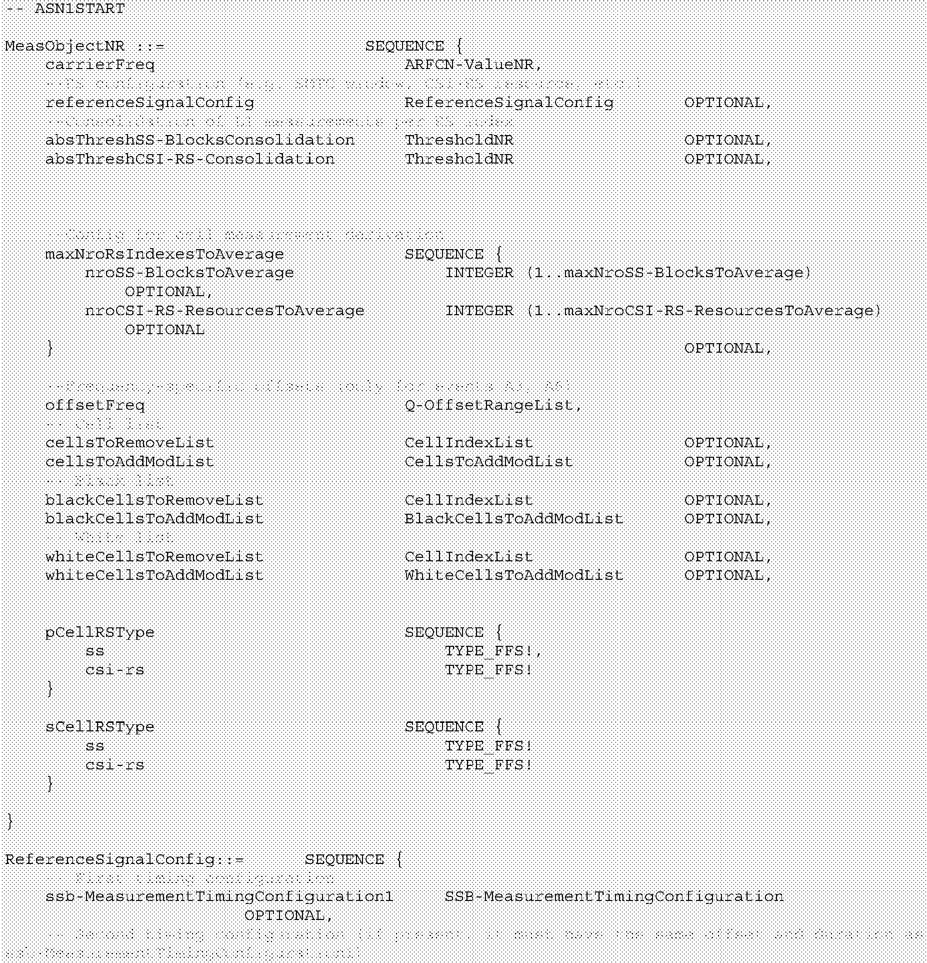

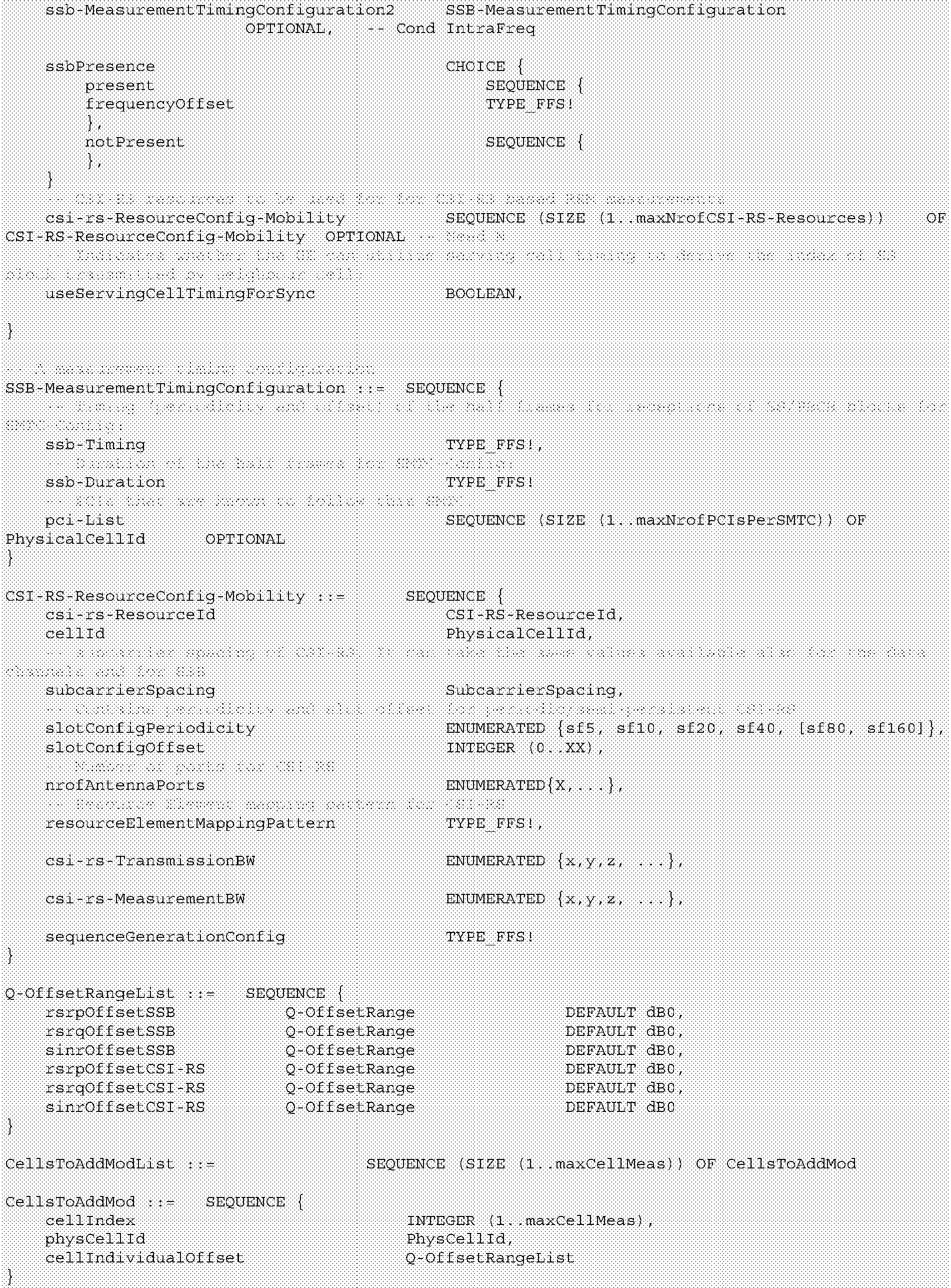

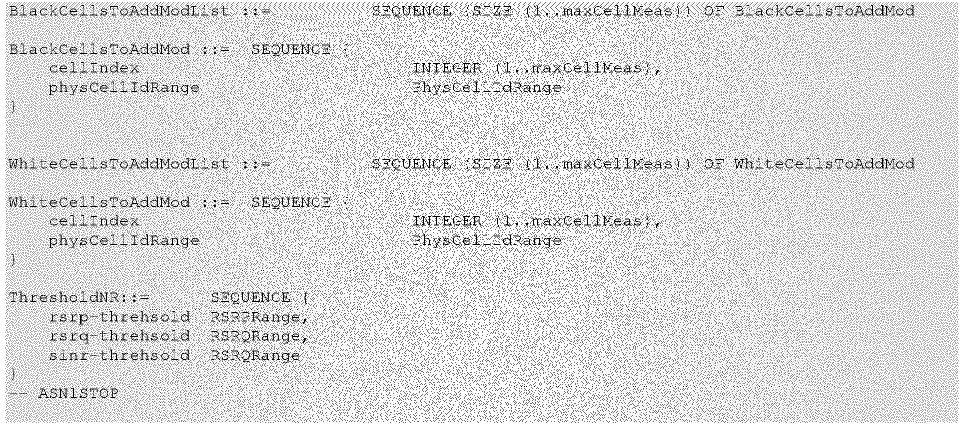

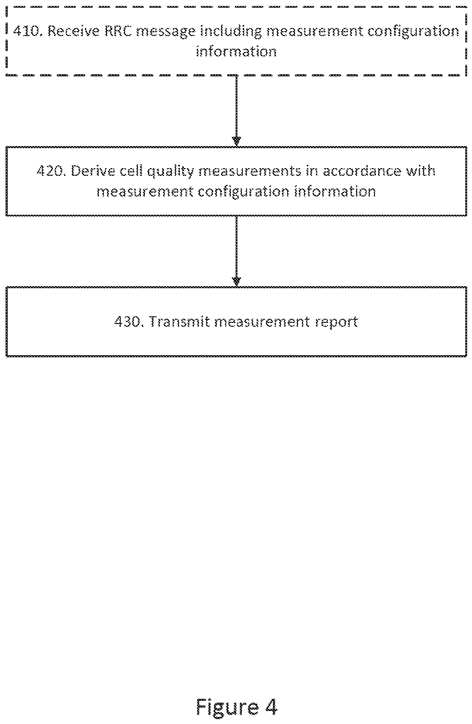

Figure 4 is a flow chart illustrating a method which can be performed in a wireless device or UE, such as UE 102. The method can include:

Step 410: Receiving a radio resource control (RRC) message including measurement configuration information. The RRC message can be received from an access node, such as gNB 104. The measurement configuration information can indicate at least one threshold value associated with at least one of a reference signal type and/or a measurement quantity. The measurement configuration information includes at least one of a measurement object information element (IE) and/or a report configuration information element (IE). The threshold value(s) can be included in the measurement object and/or the report configuration.

In some embodiments, the measurement configuration information comprises respective threshold values for a plurality of reference signal types for a given frequency. The measurement configuration information indicates a SS/PBCH block measurement threshold. This does not preclude that the measurement configuration information additionally indicates a CSI-RS measurement threshold.

In some embodiments, the measurement configuration information comprises respective threshold values for a plurality of measurement quantities for a given frequency. For example, the measurement configuration information can indicate at least one of a RRSP measurement threshold, a RSRQ measurement threshold, and/or a SINR measurement threshold.

In some embodiments, these parameters can be configured for a measurement object per measurement quantity per RS type. For example, Threshold per RSRP for SS/PBCH measurements; Threshold per RSRQ for SS/PBCH measurements; Threshold per SINR for SS/PBCH measurements; Threshold per RSRP for CSI-RS measurements; Threshold per RSRQ for CSI-RS measurements; Threshold per SINR for CSI-RS measurements.

Step 420: Deriving cell quality measurements in accordance with the received measurement configuration information. The threshold value(s) can be used a threshold for beams to be considered for the cell quality derivation measurements. In some embodiments, cell quality derivation includes a beam consolidation/selection function in accordance with the measurement configuration information.

In an example embodiment, deriving cell quality measurements can include performing a first cell quality derivation associated with a first frequency based on a first reference signal type and a first measurement quantity in accordance with a first threshold value; and performing a second cell quality derivation associated with the first frequency based on the first reference signal type and a second measurement quantity in accordance with a second threshold value. As a non-limiting example, the first threshold value can be a threshold per RSRP for SS/PBCH measurements and the second threshold can be a threshold per SINR for SS/PBCH measurements.

It will be appreciated that such an example can be extended to include a third threshold value, a fourth threshold value, etc.

In an alternative example embodiment, deriving cell quality measurements can include performing a first cell quality derivation associated with a first frequency based on a first reference signal type and a first measurement quantity in accordance with a first threshold value; and performing a second cell quality derivation associated with the first frequency based on a second reference signal type and the first measurement quantity in accordance with a second threshold value. As a non-limiting example, the first threshold value can be a threshold per RSRP for SS/PBCH measurements and the second threshold can be a threshold per RSRP for CSI-RS measurements.

Those skilled in the art will appreciate that the network can configure the UE to derive measurement results for various combinations of measurement quantities and RS types based on the parameters configured in the measurement configuration information (e.g. in a given measurement object).

Step 430: Transmitting a measurement report. The UE can transmit measurement results, including the derived cell quality measurements, to an access node.

It will be appreciated that one or more of the above steps can be performed simultaneously and/or in a different order. Also, steps illustrated in dashed lines are optional and can be omitted in some embodiments.

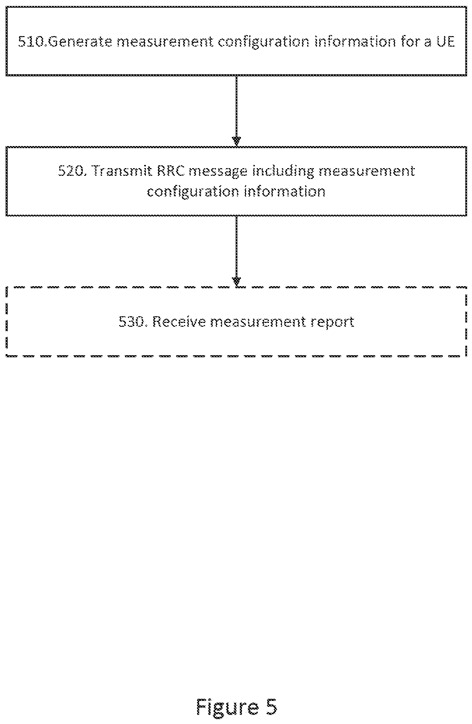

Figure 5 is a flow chart illustrating a method which can be performed in an access node, such as gNB 104. The method can include:

Step 510: Generating measurement configuration information for a UE. The measurement configuration information can indicate at least one threshold value for at least one of a reference signal type and/or a measurement quantity.

In some embodiments, the measurement configuration information comprises respective threshold values for a plurality of reference signal types for a given frequency. For example, the measurement configuration information can indicate at least one of a SS/PBCH block measurement threshold and/or a CSI-RS measurement threshold.

In some embodiments, the measurement configuration information comprises respective threshold values for a plurality of measurement quantities for a given frequency. For example, the measurement configuration information can indicate at least one of a RRSP measurement threshold, a RSRQ measurement threshold, and/or a SINR measurement threshold.

Step 520: Transmitting a radio resource control (RRC) message including the measurement configuration information. The RRC message can be transmitted to the UE.

In some embodiments, the measurement configuration information can include at least one of a measurement object IE and/or a report configuration IE. The threshold value(s) can be included in the measurement object and/or the report configuration.

Step 530: Receive a measurement report from the UE. The measurement report can include cell quality measurement results derived by the UE in accordance with the measurement configuration information.

It will be appreciated that one or more of the above steps can be performed simultaneously and/or in a different order. Also, steps illustrated in dashed lines are optional and can be omitted in some embodiments.

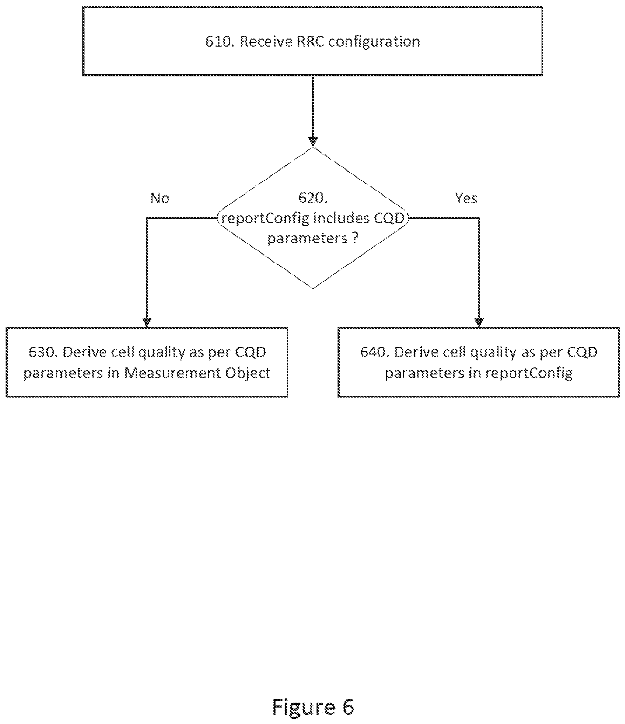

Figure 6 is a flow chart illustrating a method which can be performed in a wireless device or UE, such as UE 102. The method can include:
Step 610: Receiving RRC configuration. The RRC configuration can be received or obtained from an access node, such as gNB 104. The RRC configuration can comprise at least one of a measurement object (e.g. *MeasObject*) and/or a report configuration message (e.g. *reportConfig*)*.* In some embodiments, the RRC configuration can include cell quality derivation (CQD) parameters. The CQD parameters can include the number of beams (N) and/or the threshold (T_{threshold}) to be used by the UE for deriving cell quality.

In some embodiments, the CQD parameters can include configuration per measurement quantity, for example, a threshold per RS type and/or quantity. This can include one or more of the following thresholds: threshold per RSRP for SS/PBCH measurements, threshold per RSRQ for SS/PBCH measurements, threshold per SINR for SS/PBCH measurements, threshold per RSRP for CSI-RS measurements, threshold per RSRQ for CSI-RS measurements, and/or threshold per SINR for CSI-RS measurements.

Step 620: Determining if the report configuration message (*reportConfig*) includes CQD parameters.

Step 630: Responsive to determining that the report configuration does not include CQD parameters, deriving cell quality in accordance with the CQD parameters included in the measurement object.

Step 640: Responsive to determining that the report configuration includes CQD parameters, deriving cell quality in accordance with the CQD parameters included in the report configuration. In some embodiments, this can include deriving cell quality, per event, in accordance with the CQD parameters included in the report configuration.

In some embodiments, the received CQD parameters can include a plurality of CQD parameters corresponding to different event types.

In some embodiments, the UE can derive cell quality in accordance with both the report configuration and measurement object. In some embodiments, the measurement object includes CQD parameters and the report configuration includes offset values relative to the CQD parameters in the measurement object. For example, the UE can determine the CQD parameters to use in accordance with the threshold indicated by the measurement object and the offset (e.g. to that threshold) indicated by the report configuration.

It will be appreciated that one or more of the above steps can be performed simultaneously and/or in a different order. Also, steps illustrated in dashed lines are optional and can be omitted in some embodiments.

Figure 7 is a block diagram of an example UE 102, in accordance with certain embodiments. UE 102 includes a transceiver 710, processor 720, and memory 730. In some embodiments, the transceiver 710 facilitates transmitting wireless signals to and receiving wireless signals from radio access node 104 (e.g., via transmitter(s) (Tx), receiver(s) (Rx) and antenna(s)). The processor 720 executes instructions to provide some or all of the functionalities described above as being provided by UE, and the memory 730 stores the instructions executed by the processor 720. In some embodiments, the processor 720 and the memory 730 form processing circuitry.

The processor 720 may include any suitable combination of hardware to execute instructions and manipulate data to perform some or all of the described functions of UE 102, such as the functions of UE 102 described above. In some embodiments, the processor 720 may include, for example, one or more computers, one or more central processing units (CPUs), one or more microprocessors, one or more application specific integrated circuits (ASICs), one or more field programmable gate arrays (FPGAs) and/or other logic.

The memory 730 is generally operable to store instructions, such as a computer program, software, an application including one or more of logic, rules, algorithms, code, tables, etc. and/or other instructions capable of being executed by a processor 720. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the processor 720 of UE 102.

In some embodiments, communication interface 740 is communicatively coupled to the processor 720 and may refer to any suitable device operable to receive input for network node 104, send output from network node 104, perform suitable processing of the input or output or both, communicate to other devices, or any combination of the preceding. The communication interface 740 may include appropriate hardware (e.g., port, modem, network interface card, etc.) and software, including protocol conversion and data processing capabilities, to communicate through a network.

Other embodiments of UE 102 may include additional components beyond those shown in Figure 7 that may be responsible for providing certain aspects of the UE's functionalities, including any of the functionalities described above and/or any additional functionalities (including any functionality necessary to support the solution described above). As just one example, UE 102 may include input devices and circuits, output devices, and one or more synchronization units or circuits, which may be part of the processor. Input devices include mechanisms for entry of data into UE 102. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the UE 102 can comprise a series of functional units or modules configured to implement the functionalities of the UE described above. Referring to Figure 8, in some embodiments, the UE 102 can comprise a configuration module 750 for receiving RRC signaling including measurement configuration parameters and a cell quality module 760 for deriving cell quality measurement results in accordance with the measurement configuration parameters.

It will be appreciated that the various modules may be implemented as combination of hardware and software, for instance, the processor, memory and transceiver(s) of UE 102 shown in Figure 7. Some embodiments may also include additional modules to support additional and/or optional functionalities.

Figure 9 is a block diagram of an exemplary access node 104, in accordance with certain embodiments. Access node 104 may include one or more of a transceiver 910, processor 920, memory 930, and network interface 940. In some embodiments, the transceiver 910 facilitates transmitting wireless signals to and receiving wireless signals from UE 102 (e.g., via transmitter(s) (Tx), receiver(s) (Rx), and antenna(s)). The processor 920 executes instructions to provide some or all of the functionalities described above as being provided by an access node 104, the memory 930 stores the instructions executed by the processor 920. In some embodiments, the processor 920 and the memory 930 form processing circuitry. The network interface 940 communicates signals to backend network components, such as a gateway, switch, router, Internet, Public Switched Telephone Network (PSTN), core network nodes or radio network controllers, etc.

The processor 920 may include any suitable combination of hardware to execute instructions and manipulate data to perform some or all of the described functions of access node 104, such as those described above. In some embodiments, the processor 920 may include, for example, one or more computers, one or more central processing units (CPUs), one or more microprocessors, one or more application specific integrated circuits (ASICs), one or more field programmable gate arrays (FPGAs) and/or other logic.

The memory 930 is generally operable to store instructions, such as a computer program, software, an application including one or more of logic, rules, algorithms, code, tables, etc. and/or other instructions capable of being executed by a processor 920. Examples of memory 930 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 940 is communicatively coupled to the processor 920 and may refer to any suitable device operable to receive input for access node 104, send output from access node 104, perform suitable processing of the input or output or both, communicate to other devices, or any combination of the preceding. The network interface 940 may include appropriate hardware (e.g., port, modem, network interface card, etc.) and software, including protocol conversion and data processing capabilities, to communicate through a network.

Other embodiments of access node 104 may include additional components beyond those shown in Figure 9 that may be responsible for providing certain aspects of the access node's functionalities, including any of the functionalities described above and/or any additional functionalities (including any functionality necessary to support the solutions described above). The various different types of network nodes may include components having the same physical hardware but configured (e.g., via programming) to support different radio access technologies, or may represent partly or entirely different physical components.

In some embodiments, the access node 104, which can be, for example, a radio access node, may comprise a series of modules configured to implement the functionalities of the access node 104 described above. Referring to Figure 10, in some embodiments, the access node 104 can comprise a configuration module 950 for generating measurement configuration parameters and a transmission module 960 for transmitting the measurement configuration parameters.

It will be appreciated that the various modules may be implemented as combination of hardware and software, for instance, the processor, memory and transceiver(s) of access node 104 shown in Figure 9. Some embodiments may also include additional modules to support additional and/or optional functionalities.

Processors, interfaces, and memory similar to those described with respect to Figures 7 and 9 may be included in other network nodes (such as core network node 106). Other network nodes may optionally include or not include a wireless interface (such as the transceiver described in Figures 7 and 9).

Some embodiments may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause processing circuitry (e.g. a processor) to perform steps in a method according to one or more embodiments. Those of ordinary skill in the art will appreciate that other instructions and operations necessary to implement the described embodiments may also be stored on the machine-readable medium. Software running from the machine-readable medium may interface with circuitry to perform the described tasks.

The above-described embodiments are intended to be examples only. Alterations, modifications and variations may be effected to the particular embodiments by those of skill in the art without departing from the scope of the invention as defined by the appended claims.

### GLOSSARY

The present description may comprise one or more of the following abbreviation:
- 1x RTT: CDMA2000 1x Radio Transmission Technology
- 3GPP: Third Generation Partnership Project
- 5G: Fifth Generation
- ABS: Almost Blank Subframe
- ACK: Acknowledgement
- ADC: Analog-to-digital conversion
- AGC: Automatic gain control
- AN: Access Network
- ANR: Automatic neighbor relations
- AP: Access point
- ARQ: Automatic Repeat Request
- AS: Access Stratum
- AWGN: Additive White Gaussian Noise band
- BCCH: Broadcast Control Channel
- BCH: Broadcast Channel
- BLER: Block error rate
- BS: Base Station
- BSC: Base station controller
- BTS: Base transceiver station
- CA: Carrier Aggregation
- CC: Component carrier
- CCCH SDU: Common Control Channel SDU
- CDMA: Code Division Multiplexing Access
- CG: Cell group
- CGI: Cell Global Identifier
- CP: Cyclic Prefix
- CPICH Ec/No: CPICH Received energy per chip divided by the power density in the
- CPICH: Common Pilot Channel
- CQI: Channel Quality information
- C-RNTI: Cell RNTI
- CRS: Cell-specific Reference Signal
- CSG: Closed subscriber group
- CSI: Channel State Information
- DAS: Distributed antenna system
- DC: Dual connectivity
- DCCH: Dedicated Control Channel
- DCI: Downlink Control Information
- DFT: Discrete Fourier Transform
- DL: Downlink
- DL-SCH: Downlink shared channel
- DMRS: Demodulation Reference Signal
- DRX: Discontinuous Reception
- DTCH: Dedicated Traffic Channel
- DTX: Discontinuous Transmission
- DUT: Device Under Test
- EARFCN: Evolved absolute radio frequency channel number
- ECCE: Enhanced Control Channel Element
- ECGI: Evolved CGI
- E-CID: Enhanced Cell-ID (positioning method)
- eMBB: Enhanced Mobile Broadband
- eNB: E-UTRAN NodeB or evolved NodeB
- ePDCCH: enhanced Physical Downlink Control Channel
- EPS: Evolved Packet System
- E-SMLC: evolved Serving Mobile Location Center
- E-UTRA: Evolved UTRA
- E-UTRAN: Evolved UTRAN
- FDD: Frequency Division Duplex
- FDM: Frequency Division Multiplexing
- FFT: Fast Fourier transform
- GERAN: GSM EDGE Radio Access Network
- gNB: 5G radio base station
- GSM: Global System for Mobile communication
- HARQ: Hybrid Automatic Repeat Request
- HD-FDD: Half duplex FDD
- HO: Handover
- HRPD: High Rate Packet Data
- HSPA: High Speed Packet Access
- IE: Information Element
- LCMS: Level of Criticality of the Mobility State
- LPP: LTE Positioning Protocol
- LTE: Long-Term Evolution
- M2M: Machine to Machine
- MAC: Medium Access Control
- MBMS: Multimedia Broadcast Multicast Services
- MBSFN ABS: MBSFN Almost Blank Subframe
- MBSFN: Multimedia Broadcast multicast service Single Frequency Network
- MCG: Master cell group
- MCS: Modulation and coding scheme
- MDT: Minimization of Drive Tests
- MeNB: Master eNode B
- MIB: Master Information Block
- MME: Mobility Management Entity
- MPDCCH: MTC Physical Downlink Control Channel
- MRTD: Maximum Receive Timing Difference
- MSC: Mobile Switching Center
- Msg: Message
- MSR: Multi-standard Radio
- MTC: Machine Type Communication

- NACK: Negative acknowledgement
- NAS: Non-Access Stratum
- NDI: Next Data Indicator
- NPBCH: Narrowband Physical Broadcast Channel
- NPDCCH: Narrowband Physical Downlink Control Channel
- NR: New Radio
- O&M: Operation and Maintenance
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- PBCH: Physical Broadcast Channel
- PCC: Primary Component Carrier
- P-CCPCH: Primary Common Control Physical Channel
- PCell: Primary Cell
- PCFICH: Physical Control Format Indicator Channel
- PCG: Primary Cell Group
- PCH: Paging Channel
- PCI: Physical Cell Identity
- PDCCH: Physical Downlink Control Channel
- PDSCH: Physical Downlink Shared Channel
- PDU: Protocol Data Unit
- PGW: Packet Gateway
- PHICH: Physical HARQ indication channel
- PLMN: Public Land Mobile Network
- PMI: Precoder Matrix Indicator
- PRACH: Physical Random Access Channel
- ProSe: Proximity Service
- PRS: Positioning Reference Signal
- PSC: Primary serving cell
- PSCell: Primary SCell
- PSS: Primary Synchronization Signal
- PSSS: Primary Sidelink Synchronization Signal
- PUCCH: Physical Uplink Control Channel
- PUSCH: Physical Uplink Shared Channel
- QAM: Quadrature Amplitude Modulation
- RA: Random Access
- RACH: Random Access Channel
- RAN: Radio Access Network
- RAT: Radio Access Technology
- RB: Resource Block
- RF: Radio Frequency
- RLM: Radio Link Management
- RNC: Radio Network Controller
- RNTI: Radio Network Temporary Identifier
- RRC: Radio Resource Control
- RRH: Remote Radio Head
- RRM: Radio Resource Management
- RRU: Remote Radio Unit
- RSCP: Received Signal Code Power
- RSRP: Reference Signal Received Power
- RSRQ: Reference Signal Received Quality
- RSSI: Received Signal Strength Indicator
- RSTD: Reference Signal Time Difference
- SCC: Secondary Component Carrier
- SCell: Secondary Cell
- SCG: Secondary Cell Group
- SCH: Synchronization Channel
- SDU: Service Data Unit
- SeNB: Secondary eNodeB
- SFN: System Frame/Frequency Number
- SGW: Serving Gateway
- SI: System Information
- SIB: System Information Block
- SINR: Signal to Interference and Noise Ratio
- SNR: Signal Noise Ratio
- SPS: Semi-persistent Scheduling
- SON: Self-organizing Network
- SR: Scheduling Request
- SRS: Sounding Reference Signal
- SSC: Secondary Serving Cell
- SSS: Secondary synchronization signal
- SSSS: Secondary Sidelink Synchronization Signal
- TA: Timing Advance
- TAG: Timing Advance Group
- TDD: Time Division Duplex
- TDM: Time Division Multiplexing
- TRP: Transmission/Reception Point or Transmit/Receive Point
- TTI: Transmission Time Interval
- Tx: Transmitter
- UARFCN: UMTS Absolute Radio Frequency Channel Number
- UE: User Equipment
- UL: Uplink
- UMTS: Universal Mobile Telecommunication System
- URLLC: Ultra-Reliable Low Latency Communication
- UTRA: Universal Terrestrial Radio Access
- UTRAN: Universal Terrestrial Radio Access Network
- V2I: Vehicle-to-Infrastructure
- V2P: Vehicle-to-Pedestrian
- V2X: Vehicle-to-X
- WCDMA: Wide CDMA
- WLAN: Wireless Local Area Network

## Claims

1. A method performed by a user equipment, UE, (102), the method comprising:
receiving (302, 410) a radio resource control, RRC, message including measurement configuration information, the measurement configuration information (i) including at least one of a measurement object information element, IE, and a report configuration IE and (ii) indicating at least one threshold value associated with at least one of a reference signal type and a measurement quantity, including a first threshold value associated with a first reference signal type and a first measurement quantity and a second threshold value associated with the first reference signal type and a second measurement quantity, wherein the measurement configuration information (i) comprises respective threshold values for a plurality of reference signal types for a given frequency and (ii) indicates a Synchronization Signal/Physical Broadcast Channel, SS/PBCH, block measurement threshold;
deriving (303, 420) cell quality measurements in accordance with the measurement configuration information; and
transmitting (304, 430) a measurement report.

2. The method of claim 1, wherein the measurement configuration information indicates at least one of a Reference Signal Received Power, RSRP, measurement threshold, a Reference Signal Received Quality, RSRQ, measurement threshold, and a Signal to Interference and Noise Ratio, SINR, measurement threshold.

3. The method of claim 1, wherein:
- the method further comprises, responsive to determining that the report configuration IE includes cell quality derivation parameters, deriving cell quality, CQD, measurements in accordance with the report configuration IE; or
- the method further comprises, responsive to determining that the report configuration IE does not include cell quality derivation, CQD, parameters, deriving cell quality measurements in accordance with the measurement object IE; or
- the at least one threshold value is a threshold for beams to be considered for the cell quality derivation, CQD, measurements; or
- cell quality derivation, CQD, includes a beam consolidation/selection function; or
- the RRC message is received from an access node (104); or
- the measurement report is transmitted to an access node (104).

4. A user equipment, UE, (102) comprising a radio interface (740) and processing circuitry (720, 730) configured to:
receive a radio resource control, RRC, message including measurement configuration information, the measurement configuration information i) including at least one of a measurement object information element, IE, and a report configuration IE and ii) indicating at least one threshold value associated with at least one of a reference signal type and a measurement quantity, including a first threshold value associated with a first reference signal type and a first measurement quantity and a second threshold value associated with the first reference signal type and a second measurement quantity, wherein the measurement configuration information (i) comprises respective threshold values for a plurality of reference signal types for a given frequency and (ii) indicates a Synchronization Signal/Physical Broadcast Channel, SS/PBCH, block measurement threshold;
derive cell quality measurements in accordance with the measurement configuration information; and
transmit a measurement report.

5. The UE of claim 4, further configured to perform the method of claim 2 or 3.

6. A method performed by an access node (104), the method comprising:
generating (301, 510) measurement configuration information for a user equipment, UE (102), the measurement configuration information (i) including at least one of a measurement object information element, IE, and a report configuration IE and (ii) indicating at least one threshold value for at least one of a reference signal type and a measurement quantity, wherein the measurement configuration information (i) comprises respective threshold values for a plurality of reference signal types for a given frequency and (ii) indicates a Synchronization Signal/Physical Broadcast Channel, SS/PBCH, block measurement threshold;
transmitting (302, 520) a radio resource control, RRC, message including the measurement configuration information to the UE, the measurement configuration information including a first threshold value associated with a first reference signal type and a first measurement quantity and a second threshold value associated with the first reference signal type and a second measurement quantity; and
receiving (304, 530) a measurement report from the UE.

7. The method of claim 6, wherein the measurement configuration information indicates at least one of a Reference Signal Received Power, RSRP, measurement threshold, a Reference Signal Received Quality, RSRQ, measurement threshold, and a Signal to Interference and Noise Ratio, SINR, measurement threshold.

8. An access node (104) comprising a radio interface and processing circuitry configured to:
generate measurement configuration information for a user equipment, UE (102), the measurement configuration information i) including at least one of a measurement object information element, IE, and a report configuration IE and ii) indicating at least one threshold value for at least one of a reference signal type and a measurement quantity, wherein the measurement configuration information (i) comprises respective threshold values for a plurality of reference signal types for a given frequency and (ii) indicates a Synchronization Signal/Physical Broadcast Channel, SS/PBCH, block measurement threshold;
transmit a radio resource control (RRC) message including the measurement configuration information to the UE, the measurement configuration information including a first threshold value associated with a first reference signal type and a first measurement quantity and a second threshold value associated with the first reference signal type and a second measurement quantity; and
receive a measurement report from the UE.

9. The access node of claim 8, further configured to perform a method according to claim 7.

10. A computer-readable medium (730, 930) comprising code portions which, when executed on a processor of a user equipment, UE, or an access node (720, 920), configure the processor to perform all steps of a method according to any one of the claims 1 to 3, 6 and 7.

## Patentansprüche

1. Verfahren, das durch ein Benutzerendgerät, UE, (102) durchgeführt wird, wobei das Verfahren Folgendes umfasst:
Empfangen (302, 410) einer Funkressourcensteuernachricht, RRC-Nachricht, die Messkonfigurationsinformationen beinhaltet, wobei die Messkonfigurationsinformationen (i) mindestens eines von einem Messobjekt-Informationselement, IE, und einem Berichtskonfigurations-IE beinhalten und (ii) mindestens einen Schwellenwert angeben, der mindestens einem von einem Referenzsignaltyp und einer Messgröße zugeordnet ist, beinhaltend einen ersten Schwellenwert, der einem ersten Referenzsignaltyp und einer ersten Messgröße zugeordnet ist, und einen zweiten Schwellenwert, der dem ersten Referenzsignal und einer zweiten Messgröße zugeordnet ist, wobei die Messkonfigurationsinformationen (i) jeweilige Schwellenwerte für eine Vielzahl von Referenzsignaltypen für eine gegebene Frequenz umfassen und (ii) eine Messschwelle für einen Synchronization-Signal-/Physical-Broadcast-Channel-Block, SS/PBCH-Block, angeben;
Ableiten (303, 420) von Zellqualitätsmessungen gemäß den Messkonfigurationsinformationen; und
Übertragen (304, 430) eines Messberichts.

2. Verfahren nach Anspruch 1, wobei die Messkonfigurationsinformationen mindestens eine von einer Reference-Signal-Received-Power-Messschwelle, RSRP-Messschwelle, einer Reference-Signal-Received-Quality-Messschwelle, RSRQ-Messschwelle, und einer Signal-to-Interference-and-Noise-Ratio-Messschwelle, SINR-Messschwelle, angeben.

3. Verfahren nach Anspruch 1, wobei:
- das Verfahren ferner als Reaktion darauf, dass bestimmt wird, dass das Berichtskonfigurations-IE Zellqualitätsableitungsparameter beinhaltet, Ableiten von Zellqualitätsmessungen, CQD-Messungen, gemäß dem Berichtskonfigurations-IE umfasst; oder
- das Verfahren ferner als Reaktion darauf, dass bestimmt wird, dass das Berichtskonfigurations-IE keine Zellqualitätsableitungsparameter, CQD-Parameter, beinhaltet, Ableiten von Zellqualitätsmessungen gemäß dem Messobjekt-IE umfasst; oder
- der mindestens eine Schwellenwert eine Schwelle für bei den Zellqualitätsableitungsmessungen, CQD-Messungen, zu berücksichtigende Strahlen ist; oder
- die Zellqualitätsableitung, CQD, eine Strahlkonsolidierungs- /-auswahlfunktion beinhaltet; oder
- die RRC-Nachricht von einem Zugangsknoten (104) empfangen wird; oder
- der Messbericht an einen Zugangsknoten (104) übertragen wird.

4. Benutzerendgerät, UE, (102), das eine Funkschnittstelle (740) und eine Verarbeitungsschaltung (720, 730) umfasst, die zu Folgendem konfiguriert sind:
Empfangen einer Funkressourcensteuernachricht, RRC-Nachricht, die Messkonfigurationsinformationen beinhaltet, wobei die Messkonfigurationsinformationen (i) mindestens eines von einem Messobjekt-Informationselement, IE, und einem Berichtskonfigurations-IE beinhalten und (ii) mindestens einen Schwellenwert angeben, der mindestens einem von einem Referenzsignaltyp und einer Messgröße zugeordnet ist, beinhaltend einen ersten Schwellenwert, der einem ersten Referenzsignaltyp und einer ersten Messgröße zugeordnet ist, und einen zweiten Schwellenwert, der dem ersten Referenzsignaltyp und einer zweiten Messgröße zugeordnet ist, wobei die Messkonfigurationsinformationen (i) jeweilige Schwellenwerte für eine Vielzahl von Referenzsignaltypen für eine gegebene Frequenz umfassen und (ii) eine Messschwelle für einen Synchronization-Signal-/Physical-Broadcast-Channel-Block, SS/PBCH-Block, angeben;
Ableiten von Zellqualitätsmessungen gemäß den Messkonfigurationsinformationen; und
Übertragen eines Messberichts.

5. UE nach Anspruch 4, das ferner dazu konfiguriert ist, das Verfahren nach Anspruch 2 oder 3 durchzuführen.

6. Verfahren, das durch einen Zugangsknoten (104) durchgeführt wird, wobei das Verfahren Folgendes umfasst:
Generieren (301, 510) von Messkonfigurationsinformationen für ein Benutzerendgerät, UE, (102), wobei die Messkonfigurationsinformationen (i) mindestens eines von einem Messobjekt-Informationselement, IE, und einem Berichtskonfigurations-IE beinhalten und (ii) mindestens einen Schwellenwert für mindestens eines von einem Referenzsignaltyp und einer Messgröße angeben, wobei die Messkonfigurationsinformationen (i) jeweilige Schwellenwerte für eine Vielzahl von Referenzsignaltypen für eine gegebene Frequenz umfassen und (ii) eine Messschwelle für einen Synchronization-Signal-/Physical-Broadcast-Channel-Block, SS/PBCH-Block, angeben;
Übertragen (302, 520) einer Funkressourcensteuernachricht, RRC-Nachricht, die die Messkonfigurationsinformationen beinhaltet, an das UE, wobei die Messkonfigurationsinformationen einen ersten Schwellenwert, der einem ersten Referenzsignaltyp und einer ersten Messgröße zugeordnet ist, und einen zweiten Schwellenwert, der dem ersten Referenzsignaltyp und einer zweiten Messgröße zugeordnet ist, beinhalten; und
Empfangen (304, 530) eines Messberichts von dem UE.

7. Verfahren nach Anspruch 6, wobei die Messkonfigurationsinformationen mindestens eine von einer Reference-Signal-Received-Power-Messschwelle, RSRP-Messschwelle, einer Reference-Signal-Received-Quality-Messschwelle, RSRQ-Messschwelle, und einer Signal-to-Interference-and-Noise-Ratio-Messschwelle, SINR-Messschwelle, angeben.

8. Zugangsknoten (104), der eine Funkschnittstelle und eine Verarbeitungsschaltung umfasst, die zu Folgendem konfiguriert sind:
Generieren von Messkonfigurationsinformationen für ein Benutzerendgerät, UE, (102), wobei die Messkonfigurationsinformationen (i) mindestens eines von einem Messobjekt-Informationselement, IE, und einem Berichtskonfigurations-IE beinhalten und (ii) mindestens einen Schwellenwert für mindestens eines von einem Referenzsignaltyp und einer Messgröße angeben, wobei die Messkonfigurationsinformationen (i) jeweilige Schwellenwerte für eine Vielzahl von Referenzsignaltypen für eine gegebene Frequenz umfassen und (ii) eine Messschwelle für einen Synchronization-Signal-/Physical-Broadcast-Channel-Block, SS/PBCH-Block, angeben;
Übertragen einer Funkressourcensteuernachricht, RRC-Nachricht, die die Messkonfigurationsinformationen beinhaltet, an das UE, wobei die Messkonfigurationsinformationen einen ersten Schwellenwert, der einem ersten Referenzsignaltyp und einer ersten Messgröße zugeordnet ist, und einen zweiten Schwellenwert, der dem ersten Referenzsignaltyp und einer zweiten Messgröße zugeordnet ist, beinhalten; und
Empfangen eines Messberichts von dem UE.

9. Zugangsknoten nach Anspruch 8, der ferner dazu konfiguriert ist, ein Verfahren nach Anspruch 7 durchzuführen.

10. Computerlesbares Medium (730, 930), das Codeabschnitte umfasst, die bei Ausführung auf einem Prozessor eines Benutzerendgeräts, UE, oder eines Zugangsknotens (720, 920) den Prozessor dazu konfigurieren, alle Schritte eines Verfahrens nach einem der Ansprüche 1 bis 3, 6 und 7 durchzuführen.

## Revendications

1. Procédé exécuté par un équipement utilisateur, UE, (102), le procédé comprenant :
la réception (302, 410) d'un message de contrôle des ressources radio, RRC, comportant des informations de configuration de mesure, les informations de configuration de mesure (i) comportant au moins l'un parmi un élément d'information, IE, d'objet de mesure et une configuration de rapport d'IE et (ii) indiquant au moins une valeur seuil associée à au moins un type de signal de référence et une quantité de mesure, comportant une première valeur seuil associée à un premier type de signal de référence et une première quantité de mesure et une seconde valeur seuil associées au premier type de signal de référence et à une seconde quantité de mesure, dans lequel les informations de configuration de mesure (i) comprennent des valeurs seuil respectives pour une pluralité de types de signaux de référence pour une fréquence donnée et (ii) indiquent un seuil de mesure d'un bloc de signal de synchronisation/canal de diffusion physique, SS/PBCH ;
la dérivation (303, 420) de mesures de qualité de cellule conformément aux informations de configuration de mesure ; et
la transmission (304, 430) d'un rapport de mesure.

2. Procédé selon la revendication 1, dans lequel les informations de configuration de mesure indiquent au moins l'un parmi un seuil de mesure d'une puissance reçue du signal de référence, RSRP, un seuil de mesure d'une qualité reçue du signal de référence, RSRQ, et un seuil de mesure d'un rapport signal sur interférence et bruit, SINR.

3. Procédé selon la revendication 1, dans lequel :
- le procédé comprend en outre, en réponse à la détermination du fait que la configuration de rapport d'IE comporte des paramètres de dérivation de qualité de cellule, CQD, à dériver des mesures de qualité de cellule conformément à la configuration de rapport d'IE ; ou
- le procédé comprend en outre, en réponse à la détermination du fait que la configuration de rapport d'IE ne comporte pas de paramètres de dérivation de qualité de cellule, CQD, à dériver des mesures de qualité de cellule conformément à l'IE d'objet de mesure ; ou
- l'au moins une valeur seuil est un seuil pour les faisceaux à prendre en compte pour les mesures de dérivation de qualité de cellule, CQD ; ou
- la dérivation de qualité de cellule, CQD, comporte une fonction de consolidation/sélection de faisceaux ; ou
- le message RRC est reçu d'un noeud d'accès (104) ; ou
- le rapport de mesure est transmis à un noeud d'accès (104).

4. Équipement utilisateur, UE, (102) comprenant une interface radio (740) et des circuits de traitement (720, 730) configurés pour :
recevoir un message de contrôle des ressources radio, RRC, comportant des informations de configuration de mesure, les informations de configuration de mesure i) comportant au moins l'un parmi un élément d'information, IE, d'objet de mesure, et une configuration de rapport d'IE et ii) indiquant au moins une valeur seuil associée à au moins un type de signal de référence et une quantité de mesure, comportant une première valeur seuil associée à un premier type de signal de référence et une première quantité de mesure et une seconde valeur seuil associées au premier type de signal de référence et à une seconde quantité de mesure, dans lequel les informations de configuration de mesure (i) comprennent des valeurs seuil respectives pour une pluralité de types de signaux de référence pour une fréquence donnée et (ii) indiquent un seuil de mesure d'un bloc de signal de synchronisation/canal de diffusion physique, SS/PBCH ;
dériver des mesures de qualité de cellule conformément aux informations de configuration de mesure ; et
transmettre un rapport de mesure.

5. UE selon la revendication 4, configuré en outre pour exécuter le procédé selon la revendication 2 ou 3.

6. Procédé exécuté par un noeud d'accès (104), le procédé comprenant :
la génération (301, 510) des informations de configuration de mesure pour un équipement utilisateur, UE (102), les informations de configuration de mesure (i) comportant au moins l'un parmi un élément d'information, IE, d'objet de mesure et une configuration de rapport d'IE et (ii) indiquant au moins une valeur seuil pour au moins un type de signal de référence et une quantité de mesure, dans lequel les informations de configuration de mesure (i) comprennent des valeurs seuil respectives pour une pluralité de types de signaux de référence pour une fréquence donnée et (ii) indiquent un seuil de mesure d'un bloc de signal de synchronisation/canal de diffusion physique, SS/PBCH ;
la transmission (302, 520) d'un message de contrôle des ressources radio, RRC, comportant les informations de configuration de mesure à l'UE, les informations de configuration de mesure comportant une première valeur seuil associée à un premier type de signal de référence et une première quantité de mesure et une seconde valeur seuil associées au premier type de signal de référence et à une seconde quantité de mesure ; et
la réception (304, 530) d'un rapport de mesure provenant de l'UE.

7. Procédé selon la revendication 6, dans lequel les informations de configuration de mesure indiquent au moins l'un parmi un seuil de mesure d'une puissance reçue du signal de référence, RSRP, un seuil de mesure d'une qualité reçue du signal de référence, RSRQ, et un seuil de mesure d'un rapport signal sur interférence et bruit, SINR.

8. Noeud d'accès (104) comprenant une interface radio et des circuits de traitement configurés pour :
générer des informations de configuration de mesure pour un équipement utilisateur, UE (102), les informations de configuration de mesure i) comportant au moins l'un parmi un élément d'information, IE, d'objet de mesure et une configuration de rapport d'IE et ii) indiquant au moins une valeur seuil pour au moins un type de signal de référence et une quantité de mesure, dans lequel les informations de configuration de mesure (i) comprennent des valeurs seuil respectives pour une pluralité de types de signaux de référence pour une fréquence donnée et (ii) indiquent un seuil de mesure d'un bloc de signal de synchronisation/canal de diffusion physique, SS/PBCH ;
transmettre un message de contrôle des ressources radio, RRC, comportant les informations de configuration de mesure à l'UE, les informations de configuration de mesure comportant une première valeur seuil associée à un premier type de signal de référence et une première quantité de mesure et une seconde valeur seuil associées au premier type de signal de référence et à une seconde quantité de mesure ; et
recevoir un rapport de mesure provenant de l'UE.

9. Noeud d'accès selon la revendication 8, configuré en outre pour exécuter un procédé selon la revendication 7.

10. Support lisible par ordinateur (730, 930) comprenant des parties de code qui, lorsqu'elles sont exécutées sur un processeur d'un équipement utilisateur, UE, ou un noeud d'accès (720, 920), configurent le processeur pour exécuter toutes les étapes d'un procédé selon l'une quelconque des revendications 1 à 3, 6 et 7.
